# EUROPEAN PATENT APPLICATION

(11) **EP 3 745 050 A1**
(43) Date of publication of application: **02.12.2020**
(21) Application number: 20177728.1
(22) Date of filing: 01.06.2020
(51) Int. Cl.: F25B 31/00, F25B 41/04

(54) **HEAT TRANSFER CIRCUIT WITH INCREASED BEARING LUBRICANT TEMPERATURE, AND METHOD OF SUPPLYING THEREOF**

(30) Priority: 31.05.2019 US 201916427763
(71) Applicant: Trane International Inc., Davidson, NC 28036 (US)
(72) Inventor: JOHNSON, Jay H, Houston, MN 55943 (US); JEUNG, Sung Hwa, Chatsworth, CA 91311 (US); ROESLER, Jr., Charles, La Crosse, WI 54601 (US); HEGER, Joseph M, West Salem, WI 54669 (US)
(74) Representative: Haseltine Lake Kempner LLP

(57) **Abstract**

A heat transfer circuit that includes a compressor with a gas bearing, a condenser, an expander, an evaporator, a lubricant stream, and a heat source. The lubricant stream receives a portion of the working fluid and supplies the portion of the working fluid to the gas bearing of the compressor. A method of supplying lubricant to a gas bearing of a compressor in a heat transfer circuit includes compressing and further heating at least a portion of the working fluid heated in the evaporator, and supplying the compressed and further heated working fluid to the gas bearing of the compressor. A method of the supplying lubricant to a gas bearing of a compressor in a heat circuit includes generating compressed gaseous working fluid within a lubricant stream.

## Description

### FIELD

This disclosure relates to heating, ventilation, air conditioning, and refrigeration ("HVACR") systems. More specifically, embodiments herein relate to heat transfer circuits for HVACR systems.

### BACKGROUND

HVACR systems are generally used to heat, cool, and/or ventilate an enclosed space (e.g., an interior space of a commercial building or a residential building, an interior space of a refrigerated transport unit, or the like). A HVACR system may include a heat transfer circuit for providing cooled or heated air to the area. The heat transfer circuit utilizes a working fluid to cool or heat the air directly or indirectly. Typically, a heat transfer circuit includes a compressor for compressing the working fluid. The compressor includes one or more bearings that require lubrication to operate correctly.

### SUMMARY

A HVACR system can include a heat transfer circuit configured to heat and/or cool a process fluid (e.g., air, water and/or glycol, or the like). A working fluid is circulated through the heat transfer circuit. The heat transfer circuit includes a compressor for compressing the working fluid. The working fluid and process fluid separately flow through a heat exchanger to cool and/or heat the process fluid. The heat exchanger may be a condenser or an evaporator.

The heat transfer circuit includes the compressor having a gas bearing, and a lubricant stream. The lubricant stream supplies gaseous working fluid as the lubricant to the gas bearing to lubricate the gas bearing. The heat transfer circuit includes a heat source configured to prevent liquid working fluid in the gas bearing.

In an embodiment, the heat source is a heater configured to increase a temperature of the gaseous working fluid flowing through the outlet of the lubricant stream. In an embodiment, the heater is configured to heat the gas bearing and prevent the gaseous working fluid from condensing in the gas bearing.

In an embodiment, the heat source is an auxiliary compressor that provides compressed gaseous working fluid to the gas bearing during startup or shutdown.

In an embodiment, the lubricant stream includes a tank and the heat source is a heater disposed in the tank. When the compressor is to be started, the heater is configured to generate compressed gaseous working fluid by vaporizing liquid working fluid in the tank. The lubricant stream supplies the compressed gaseous working fluid to the gas bearing during the startup of the compressor.

In an embodiment, the working fluid includes one or more low GWP refrigerants. In an embodiment, the working fluid includes at least one HFO refrigerant. In an embodiment, the heat transfer circuit is oil-free and the refrigerant(s) in the working fluid lubricate the heat transfer circuit.

In an embodiment, the working fluid includes one or more refrigerants, and each of the one or more refrigerants at the outlet of the lubricant stream is gaseous.

In an embodiment, the working fluid supplied to the gas bearing has a superheat of at or about 4.0°F or greater than 4.0°F. In an embodiment, the lubricant stream includes the heater. In an embodiment, the working fluid at the inlet of the lubricant stream has a superheat of less than 4.0°F.

In an embodiment, the inlet of the lubricant stream connects to the main flow path of the heat transfer circuit at the evaporator or after the evaporator and before the condenser. In an embodiment, the lubricant stream includes both a heater and an auxiliary compressor.

In an embodiment, the heater is an electric heater.

In an embodiment, the heater is a heat exchanger through which working fluid and a process fluid separately flow. The process fluid heats the working fluid as the working fluid and the second process fluid flow through the heat exchanger. In an embodiment, the process fluid is utilized to cool a heat generating component downstream.

In an embodiment, a method of supplying lubricant to a gas bearing of a compressor in a heat transfer circuit includes compressing and further heating at least a portion of the working fluid that was heated in the evaporator with a process fluid. The method also includes supplying the compressed and further heated working fluid to the gas bearing of the compressor as the lubricant.

### BRIEF DESCRIPTION OF THE DRAWINGS

Both described and other features, aspects, and advantages of a heat transfer circuit and methods of operating a heat transfer circuit will be better understood with the following drawings:
Figure 1 is a schematic diagram of a heat transfer circuit according to an embodiment.
Figure 2 is a schematic diagram of a heat transfer circuit according to an embodiment.
Figure 3 is a schematic diagram of a heat transfer circuit according to an embodiment.
Figure 4 is a schematic diagram of a heat transfer circuit according to an embodiment.
Figure 5 is a schematic diagram of a heat transfer circuit according to an embodiment.
Figure 6 is a schematic diagram of a heat transfer circuit according to an embodiment.
Figure 7 is a schematic diagram of a heat transfer circuit according to an embodiment.
Figure 8 is a schematic diagram of a heat transfer circuit according to an embodiment.
Figure 9 is a block diagram of a method of supplying lubricant to a gas bearing of a compressor in a heat transfer circuit according to an embodiment.
Figure 10 is a block diagram of a method of supplying lubricant to a gas bearing of a compressor in a heat transfer circuit during a shutdown or a startup of the compressor according to an embodiment.

Like reference characters refer to similar features.

### DETAILED DESCRIPTION

A heating, ventilation, air conditioning, and refrigeration system ("HVACR") is generally configured to heat and/or cool an enclosed space (e.g., an interior space of a commercial building or a residential building, an interior space of a refrigerated transport unit, or the like). The HVACR system includes a heat transfer circuit to heat or cool a process fluid (e.g., air, water and/or glycol, or the like). A working fluid flows through the heat transfer circuit and is utilized to heat or cool the process fluid. The process fluid may heat and/or cool an enclosed space directly or indirectly. For example, indirect heating and/or cooling may include the working fluid heating and/or cooling an intermediate fluid (e.g., air, water and/or glycol, or the like), and then the heated/cooled intermediate fluid heating and/or cooling the process fluid.

A working fluid includes one or more refrigerants. A working fluid may also include one or more additional components. For example, an additional component may be, but is not limited to, impurities, refrigeration system additives, tracers, ultraviolet ("UV") dyes, and/or solubilizing agents.

There has been recent movement (e.g., the Kigali Amendment to the Montreal Protocol, the Paris Agreement, United States' Significant New Alternatives Policy ("SNAP")) to limit the types of refrigerants utilized in HVACR systems as concerns about environmental impact (e.g., ozone depletion, global warming impact) have increased. In particular, the movement has been to replace ozone depleting refrigerants (e.g., chlorofluorocarbons (CFCs), hydrochlorofluorocarbons (HCFCs), or the like) and high global warming potential refrigerants with refrigerants that have a lower environmental impact.

The replacement refrigerants have lower global warming potentials ("GWPs"), and are non-ozone depleting, lower in toxicity, compatible with the materials of the heat transfer circuit and its equipment, and chemically stable over the life of the equipment of the heat transfer circuit. For example, previous refrigerants having higher GWPs are R134a, R22, R125 and the like. Lower GWP refrigerants include, but are not limited to, for example, hydrofluoroolefin ("HFO") refrigerants. HFO refrigerants include, but are not limited to, for example, R1234ze (e.g., R1234ze(E)), R1336mzz (e.g., R1336mzz(Z)), R1234yf, R1233zd, R1234yf, and the like. The lower GWP refrigerants can be utilized in refrigerant mixtures such as, but not limited to, R452B, R454B, R466A, R513A, R514A, and the like. In an embodiment, lower GWP refrigerants include non-ozone depleting, lower GWP HFCs such as, but not limited to, R32 and the like. In an embodiment, the lower GWP refrigerants have a GWP of less than 700.

The heat transfer circuit includes a compressor that compresses the working fluid. The compressor includes one or more gas bearings. The gas bearing(s) forms a thin layer of compressed gas to prevent contact between bearing surfaces (e.g., an outer surface of the bearing, an outer surface of a shaft, a thrust surface, or the like). A gas bearing may be an aerostatic gas bearing or an aerodynamic-aerostatic hybrid gas bearing.

In an embodiment, an aerostatic gas bearing utilizes an external source of compressed gas to form the thin layer of gas during normal operation of the compressor. An external source of compressed gas is gas compressed by the compressor. Normal operation of the compressor does not occur when the compressor is starting up or shutting down.

In an embodiment, an aerostatic-aerodynamic hybrid gas bearing utilizes both an external source of pressurized gas and a bearing surface that is specifically configured to generate/promote formation of the thin gas layer when rotated or facing a rotating surface. The aerostatic-aerodynamic hybrid gas bearing utilizes an external source of gas until the shaft of the compressor reaches a speed at which its bearing surface is able to generate the thin gas layer. Both aerostatic gas bearings and aerostatic-dynamic hybrid gas bearings utilize an external source of gas.

A heat transfer circuit can be configured to provide compressed working fluid to the gas bearing(s) of the compressor. Each of the gas bearing(s) utilizes the compressed working fluid as the external source of pressurized gas to form the thin layer of gas that prevents contact between its bearing surfaces. A refrigerant increases in temperature when compressed. The lower GWP refrigerants have differing thermodynamic properties than previous refrigerants such as R134a R22, R125 or the like due to their different chemical structure. The replacement refrigerants have a larger heat capacity when compared to the previous refrigerants. For example, this larger heat capacity results from the lower GWP refrigerants having molecules with more atoms and/or a more complex structure. When compressed in a compressor, this larger heat capacity causes a working that contains one or more of the lower GWP refrigerants to be discharged from the compressor at a temperature closer to their temperature at which they begin to condense than the previous refrigerants. When a refrigerant in a working fluid is partially or fully replaced with a lower GWP refrigerant, this can result in the compressed working fluid discharged from the compressor having a lesser amount of superheat (relative to a working fluid without the lower GWP refrigerant). The superheat of a working fluid is the difference between its current temperature and its dew point at the same pressure (e.g., T(Pₓ)ₛᵤₚₑᵣₕₑₐₜ = T(Pₓ)_{current} - T(Pₓ)_{Dew Point}). The dew point is the temperature at which the working fluid begins to condense at the same pressure. As a working fluid that includes lower GWP refrigerant(s) is closer the temperature/pressure at which it condenses, partial condensation of the working fluid can occur when flowing into and through the gas bearing(s), which can lower performance and/or damage the gas bearing(s) and/or the compressor. Embodiments described herein are directed to heat transfer circuits and methods of supplying lubricant to the gas bearing(s) of the compressor that address lubrication condensation issues that can occur due to, for example, the use of lower GWP refrigerant(s).

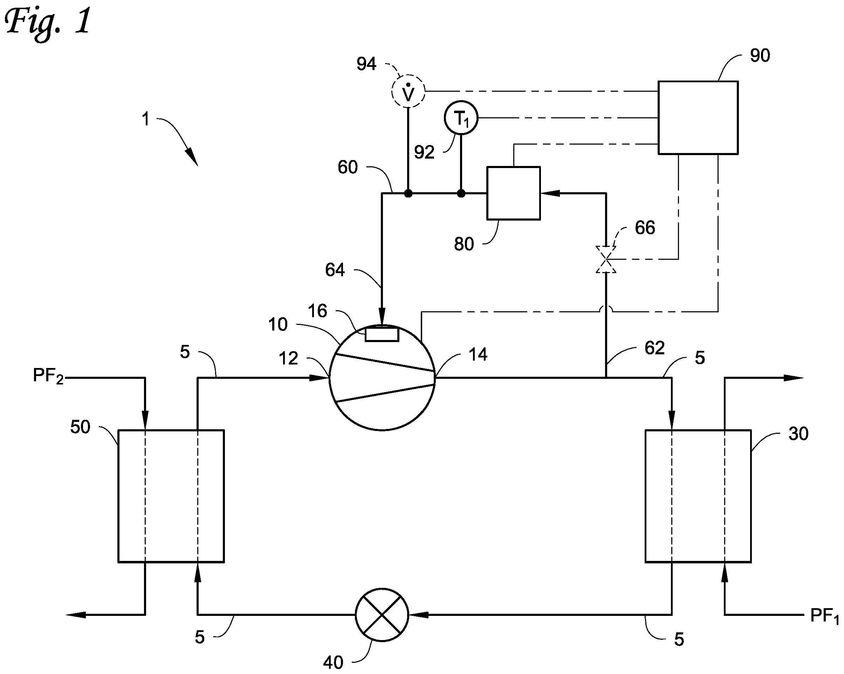

Figure 1 is a schematic diagram of a heat transfer circuit 1 according to an embodiment. In an embodiment, the heat transfer circuit 1 may be utilized in a HVACR system. The heat transfer circuit 1 includes a compressor 10, a condenser 30, an expansion device 40, and an evaporator 50. In an embodiment, the heat transfer circuit 1 can be modified to include additional components, such as, for example, an economizer heat exchanger, one or more valve(s), sensor(s) (e.g., a flow sensor, a temperature sensor), a receiver tank, or the like.

The components of the heat transfer circuit 1 are fluidly connected. The heat transfer circuit 1 can be configured as a cooling system that can be operated in a cooling mode (e.g., a fluid chiller of an HVACR system, an air conditioning system, or the like), or the heat transfer circuit 1 may be configured as a heat pump system that can be run in a cooling mode or a heating mode.

A working fluid flows through the heat transfer circuit 1. The main flow path 5 of the working fluid through the heat transfer circuit 1 extends from the compressor 10, through the condenser 30, the expansion device 40, the evaporator 50, and back to the compressor 10. More specifically, the main flow path 5 extends from an outlet 14 of the compressor 10 back to a suction inlet 12 of the compressor 10. The working fluid includes one or more lower GWP refrigerants. In an embodiment, the working fluid includes one or more HFOs refrigerants. In an embodiment, the heat transfer circuit 1 is oil-free and lubricated by the refrigerant(s) of the working fluid.

Dotted lines are provided in the Figures to indicate fluid flows through the heat exchangers (e.g., condenser 30, evaporator 50), and should be understood as not specifying a specific path of flow through each heat exchanger. Dashed dotted lines are provided in the Figures to illustrate electronic communications between different features. For example, a dashed dotted line extends from a controller 90 to a temperature sensor 92 as the controller 90 receives measurements (e.g., temperature measurements) from the temperature sensor 92. For example, a dashed-dotted line extends from the controller 90 to a heater 80 as the controller 90 controls the heater 80. In an embodiment, the controller 90 includes memory (not shown) for storing information and a processor (not shown). The controller 90 in Figure 1 and described below is described/shown as a single component. However, it should be appreciated that a "controller" as shown in the Figures and described herein may include multiple discrete or interconnected components that include a memory (not shown) and a processor (not shown) in an embodiment.

Working fluid in a lower pressure gaseous state is drawn into the suction inlet 12 of the compressor 10. In an embodiment, the compressor 10 is a centrifugal compressor, a screw compressor, or a scroll compressor. A centrifugal compressor utilizes a series rotating blades connected to a shaft and/or plate to compress a gas. In an embodiment, gas is introduced to an outer radius of the blades as the shaft and/or plate is rotated. As the blades are rotated, gas is suctioned radially inwards and is then discharged in the axial direction. The blades rotate at speeds that result in the suctioned gas being compressed as it flows radially inward. Accordingly, the compressed gas is discharged in the axial direction. In another embodiment, gas is supplied along the axis of the shaft and/or plate, and the rotating blades gas compress the gas by forcing the gas to flow radially outward. Accordingly, the compressed gas is discharged in the radial direction. A screw compressor utilizes meshed screws in which one or more of the meshed screws are rotated to compress a gas. In an embodiment, gas is introduced to an end or side of the meshed screws and is compressed between the meshed screws as meshed screw(s) are rotated. The gas is then discharged from a second end of the meshed screws from a side or end of the screws. A scroll compressor utilizes at least one pair of intermeshed scrolls in which one or both of the scrolls are rotated relative to each other. In an embodiment, gas is introduced to an outer circumference or inner circumference of the meshed scrolls and is suctioned into and trapped in pockets between the intermeshed scrolls. As the intermeshed scrolls rotate relative to teach other, the pockets move along the intermeshed scrolls and becomes smaller, which compresses the gas trapped in each pocket. The pocket then reaches an outlet and compressed gas is discharged from between the intermeshed scrolls.

The compressor 10 includes at least one gas bearing 16. The gas bearing 16 may be a thrust gas bearing and/or a radial gas bearing. The gas bearing 16 is an aerostatic gas bearing or an aerodynamic-aerostatic hybrid gas bearing. The gas bearing 16 utilizes an external source of compressed gas to form a thin layer of gas that prevents contact between its bearing surfaces.

The working fluid is compressed as it flows through the compressor 10 from the suction inlet 12 to the outlet 14 of the compressor 10. The compression of the working fluid in the compressor 10 also causes the temperature of the working fluid to increase. Accordingly, the compression of the working fluid also causes the temperature of the working fluid at the outlet 14 of the compressor 10 to have an increased temperature (relative to the temperature of working fluid at the inlet 12).

The higher pressure and temperature working fluid is discharged the outlet 14 of the compressor. The majority of the working fluid flows from the outlet 14 of the compressor 10 through the main flow path 5 to the condenser 30. A portion of the working fluid discharged from the outlet 14 of the compressor and flows into an inlet 62 of the lubricant stream 60. The lubricant stream 60 is discussed in more detail below.

A first process fluid PF₁ flows through the condenser separate from the working fluid. The condenser 30 is a heat exchanger that allows the working fluid and the first process fluid PF₁ to be a heat transfer relationship without physically mixing as they flow through the condenser 30. As the working fluid flows through the condenser 30, the working fluid is cooled by the first process fluid PF₁. Accordingly, the first process fluid PF₁ is heated by the working fluid and exits the condenser 30 at a higher temperature relative to temperature at which it entered the condenser 30. In an embodiment, the first process fluid PF₁ may be air, water and/or glycol, or the like that is suitable for absorbing and transferring heat from the working fluid and the heat transfer circuit 1. For example, the first process fluid PF₁ may be ambient air circulated from an outside atmosphere, water to be heated as hot water, or any suitable fluid for transferring heat from the heat transfer circuit 1. The working fluid becomes liquid or mostly liquid as it is cooled in the condenser 30.

The liquid/gaseous working fluid flows from the condenser 30 to the expansion device 40. The expansion device 40 allows the working fluid to expand. The expansion causes the working fluid to significantly decrease in temperature. An "expansion device" as described herein may also be referred to as an expander. In an embodiment, the expander may be an expansion valve, expansion plate, expansion vessel, orifice, or the like, or other such types of expansion mechanisms. It should be appreciated that the expander may be any type of expander used in the field for expanding a working fluid to cause the working fluid to decrease in temperature.

The lower temperature gaseous/liquid working fluid then flows from the expansion device 40 to and through the evaporator 50. A second process fluid PF₂ also flows through the evaporator 50 separately from the working fluid. The evaporator 50 is a heat exchanger that allows the working fluid and the second process fluid PF₂ to be in a heat transfer relationship within the evaporator 50 without physically mixing. As the working fluid and the second process fluid PF₂ flow through the evaporator 50, the working fluid absorbs heat from the second process fluid PF₂ which cools the second process fluid PF₂. Accordingly, the second process fluid PF₂ exits the evaporator 50 at a lower temperature than the temperature at which it entered the evaporator 50. The working fluid is gaseous or mostly gaseous as it exits the evaporator 50. The working fluid flows from the evaporator 50 to the suction inlet 12 of the compressor 10.

In an embodiment, the second process fluid PF₂ is air cooled by the HVACR system and ventilated to the enclosed space to be conditioned. In an embodiment, the second process fluid PF₂ is an intermediate fluid (e.g., water, heat transfer fluid, or the like), and the cooled second process fluid PF₂ may be utilized by the HVACR system to cool air in or ventilated to the enclosed space to be conditioned.

A portion of the compressed working fluid that is discharged from the compressor 10 flows into the lubricant stream 60 instead of flowing to the condenser 30. In an embodiment, the portion of the compressed working fluid that flows into the lubricant stream 60 is at or about 0.2% to at or about 5% by volume of the working fluid discharged from the compressor 10. In an embodiment, the portion of the compressed working fluid that flows into the lubricant stream 60 is at or about 0.2% to at or about 5% by volume of the working fluid compressed by the compressor 10.

As discussed above, the compressor 10 includes a gas bearing 16 that needs compressed gaseous lubricant to operate properly. Compressed working fluid is supplied to the gas bearing 16 by the lubricant stream 60 to lubricate the gas bearing 16. The working fluid supplied to the gas bearing 16 is gaseous. More specifically, the refrigerant(s) of the working fluid supplied to the gas bearing 16 from the lubricant stream are each gaseous. The gas bearing 16 forms a thin layer of flowing gaseous working fluid between its bearing surfaces (not shown) to prevent contact between the bearing surfaces. The gas in the thin layer then mixes with working fluid entering the compressor 10 through the suction inlet 12, and is compressed and discharged from the outlet 14 of the compressor 10.

As shown in Figure 1, the lubricant stream 60 includes a heater 80 configured to heat the working fluid as the working fluid passes through the lubricant stream 60. The heater 80 is disposed between the inlet 62 and the outlet 64 of the lubricant stream 60. In an embodiment, the heater 80 is a heat source of the heat transfer circuit 1.

In an embodiment, the working fluid discharged by the compressor 10 has a superheat of less than 4°F. In an embodiment, the working fluid discharged by the compressor has a superheat of less than 3°F. The heater 80 is configured to heat the working fluid such that compressed working fluid supplied to the gas bearing 16 has a desired amount of superheat. In an embodiment, the desired amount of superheat is at or about 4°F or greater than 4°F. In an embodiment, the desired amount of superheat is at or about 4.5°F or greater than 4.5°F. In an embodiment, the desired amount of superheat is at or about 5°F or greater than 5°F.

The heater 80 increases the amount of superheat of the compressed working fluid supplied to the gas bearing 16 of the compressor 10. This greater amount of superheat prevents the gaseous refrigerant(s) supplied to the gas bearing 16 from condensing while in the gas bearing 16. In an embodiment, all of the refrigerant(s) in the compressed working fluid discharged from the outlet 64 of the lubricant stream 60 are entirely gaseous.

In an embodiment, the heater 80 in Figure 1 is an electric heater. Electricity is supplied to the heater 80 and the heater 80 generates heat from the supplied electricity which is used to increase the temperature of the working fluid flowing through the heater 80. In an embodiment, the heat transfer circuit 1 includes a controller 90 and a temperature sensor 92. The temperature sensor 92 is located after the heater 80 and senses the temperature T₁ of the compressed working fluid after passing through the heater 80. For example, the temperature T₁ is the temperature of the compressed working fluid at the outlet 64 of the lubricant stream 60. The controller 90 is configured to control the heating provided by the heater 80 to working fluid flowing through the heater 80 so that the working fluid has the desired amount of superheat as described above. The controller 90 may control the amount of heat provided by the heater 80 to the working fluid based on the temperature T₁. In an embodiment, electricity is supplied to the heater 80 by the controller 90. The controller 90 is configured to supply an amount of electricity to the heater 80 so that the heater 80 heats the working fluid to the temperature corresponding to the desired amount of superheat.

In an embodiment, a minimum amount of working fluid is needed for the gas bearing 16 to adequately support a load. The load may vary depending on the operating conditions of the compressor 10 (e.g., the compression ratio, volumetric flow rate of working fluid being compressed, or the like). For example, the amount of working fluid for the gas bearing 16 to adequately support its load may be known for each operation condition of the compressor 10 based on the configuration of the compressor 10 and/or previous testing of the compressor 10.

In an embodiment, the lubricant stream 60 includes an optional valve 66 and an optional flow sensor 94. In an embodiment, the controller 90 operates the optional valve 66 based on the flow sensor 94 so that the lubricant stream 60 provides at least a sufficient amount of working fluid to the gas bearing 16 for the gas bearing 16 to support its load. In such an embodiment, the optional valve 66 may stop flow through the lubricant stream 60 to the gas bearing 16 once the compressor 10 finishes its start up or shutting down. In an embodiment, lubricant stream 60 may configured to passively control the amount of working fluid that flows through the lubricant stream 60. For example, the inlet 62 in an embodiment may be sized so that at least the sufficient amount of the working fluid flows into the lubricant stream 60 from the main flow path 5 and is supplied to the bearing 16. The size of the inlet 62 in an embodiment is based on the pressure of the main flow path 5 at the inlet 62 of the lubricant stream 60 such that the size of the inlet 62 and the pressure of the main flow stream 5 at the inlet 62 cause at least the sufficient amount of working fluid to flow into the lubricant stream 60 from the main flow path 5. In an embodiment, the pressure of the main flow stream 5 at the inlet 62 may be the minimum pressure that occurs in the main flow stream 5 at the inlet 62 during normal operation of the compressor 10. In an embodiment, the lubricant stream 60 may be partially or fully incorporated into the housing of the compressor 10. In an embodiment, part or all or the lubricant stream 60 may be located external to the compressor 10.

In an embodiment, the gas bearing 16 may be an aerostatic-hydrostatic hybrid bearing that does not utilize external pressurized gas during normal operation of the compressor 10. In such an embodiment, the lubricant stream 60 may be configured to stop supplying working fluid to the gas bearing 16 when the compressor 10 is not starting up and/or shutting down. For example, the controller 190 in an embodiment may be configured to close the optional valve 66 when the compressor 10 is not starting up and/or shutting down.

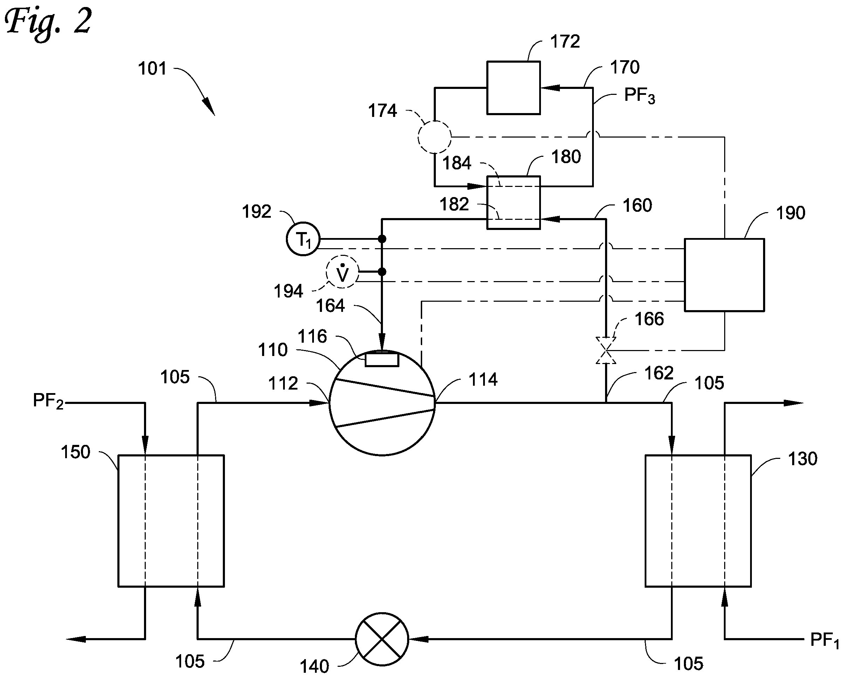

Figure 2 is a schematic diagram of a heat transfer circuit 101 according to an embodiment. In an embodiment, the heat transfer circuit 101 may be employed in an HVACR system. The heat transfer circuit 101 is similar to the heat transfer circuit 1 in Figure 1, except with respect to the configuration of the lubricant stream 160. For example, the heat transfer circuit 101 includes a main flow path 105, a compressor 110 with a suction inlet 112, an outlet 114, and at least one gas bearing 116; a condenser 130; an expansion device 140; and an evaporator 150. The condenser 130 utilizes a first process fluid PF₁ to cool working fluid flowing through the condenser 130, and the evaporator 150 utilizes the working fluid flowing through the evaporator 150 to cool a second process fluid PF₂ similar to the heat transfer circuit 1 in Figure 1. As similarly discussed regarding the heat transfer circuit 1 in Figure 1, the heat transfer circuit 101 in an embodiment may include additional components than those shown in Figure 2. In an embodiment, the heat transfer circuit 101 is oil-free and lubricated by the refrigerant(s) of the working fluid.

The lubricant stream 160 provides compressed working fluid to a gas bearing 116 of the compressor 110 similar to the lubricant stream 60 in Figure 1. The lubricant stream 160 includes an inlet 162, an outlet 164, and a heater 180 disposed between the inlet 162 and the outlet 164. The heater 180 is a heat exchanger that includes a first side 182 and a second side 184. It should be understood that a "side" in a heat exchanger refers to a separate flow passageway through the heat exchanger, and does not refer to a particular physical orientation. Fluids flowing through the first side 182 and the second side 184 of the heater 180 exchange heat but do not physically mix. Compressed working fluid enters the lubricant stream 160 through the inlet 162 and exits the lubricant stream 160 through the outlet 164. The compressed working fluid flows through the lubricant stream 160 by flowing from the inlet 162 to the heater 180, through the first side 182 of the heater 180, and from the heater 180 to the outlet 164. The working fluid flows from the outlet 164 of the lubricant stream 160 to the gas bearing 116. The lubricant stream 160 supplying the amount of lubricant to the gas bearing 116 to adequately lubricate the gas bearing 116.

A cooling circuit 170 is configured to cool a heat generating component 172. For example, operation of the component 172 causes the heat generating component 172 to increase in temperature. In an embodiment, the heat generating component 172 is a variable frequency drive (VFD). For example, the VFD may be for the compressor 110. In another embodiment, the heat generating component 172 may be a different electronic or mechanical component of the HVACR system that generates heat during operation and needs cooling. A third process fluid PF₃ flows through the cooling circuit 170 and is a medium for transferring heat from the heat generating component 172 and cooling the heat generating component 172. In an embodiment, the third process fluid PF₃ may be air, water and/or glycol, or the like that is suitable for absorbing heat and transferring from the component 172 to another fluid (e.g., the working fluid).

The third process fluid PF₃ flows through the second side 184 of the heater 180. In an embodiment, after being heated by the component 172, the third process fluid PF₃ flows from the component 172 to and through a pump 174, from the pump 174 to the heater 180, through the second side 184 of the heater 180, and from the heat 180 back to the component 172. The pump 174 is configured to circulate the third process fluid PF₃ through the cooling circuit 170. As the working fluid flows through the first side 182 of the heater 180, the working fluid absorbs heat from the third process fluid PF₃ in the second side 184, which cools the third process fluid PF₃. Accordingly, the working fluid flowing through the first side 182 is heated as it absorbs heats from the third process fluid PF₃ in the second side 184. The cooled third process fluid PF₃ then flows from the heater 180 back to the component 172. In an embodiment, the heater 180 is a heat source of the heat transfer circuit 101.

The cooling circuit 170 in Figure 2 includes the heat generating component 172, the pump 174, and the heater 180. However, it should be appreciated that the cooling circuit 170 in an embodiment may be modified to relocate or not include the pump 174, and/or to include additional components such as, for example, valve(s), sensor(s) (e.g., a flow sensor, a temperature sensor), a receiver tank, or the like.

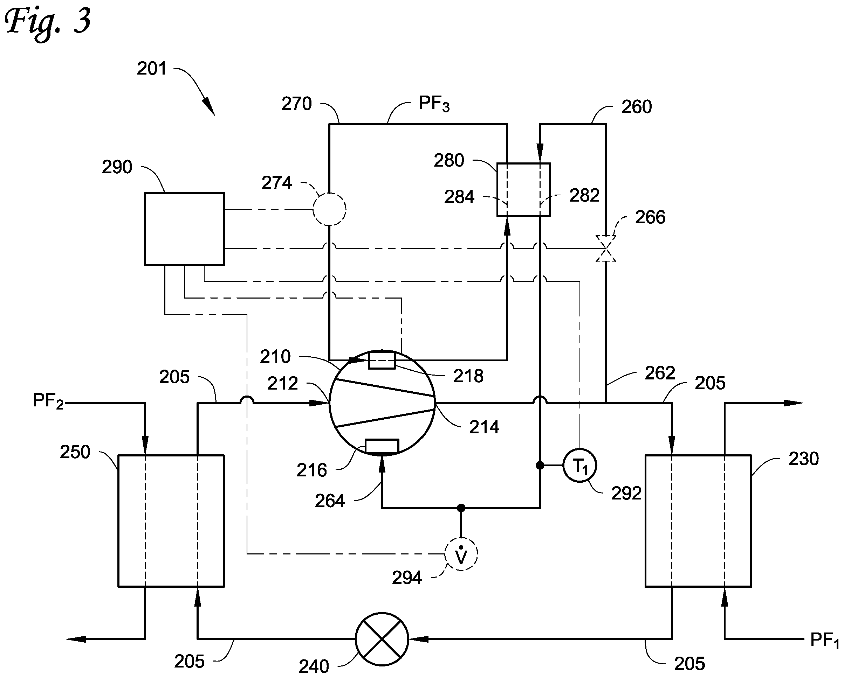

The heat transfer circuit 101 includes a controller 190. In an embodiment, the controller 190 may be the controller of the HVACR system. The lubricant stream 160 includes a temperature sensor 192 similar to the temperature sensor 92 in Figure 1. The temperature sensor 192 senses the temperature T₁ of the working fluid after passing through the heater 180. The controller 190 is configured to control the heating provided by the heater 180 to the working fluid flowing through the heater 180 so that the working fluid supplied to the gas bearing 116 from the lubricant stream 160 has the desired amount of superheat. The controller 190 may control the amount of heat provided by the heater 180 to the working fluid based on the temperature T₁. For example, the controller 190 may operate the pump 174 so that the compressed working fluid provided to the gas bearing 116 by the lubricant stream 160 has the desired amount of superheat. The desired amount of superheat can be the same as disused above regarding the lubricant stream 60 in Figure 1. In an embodiment, the lubricant stream 160 may also include an auxiliary heater (e.g., heater 80, heater 280 in Figure 3, or the like) to supplement the heater 180.

A portion of the compressed working fluid that is discharged from the compressor 110 flows into the lubricant stream 160 instead of flowing to the condenser 130. In an embodiment, the portion of the compressed working fluid that flows into the lubricant stream 160 is at or about 0.2% to at or about 5% by volume of the working fluid discharged from the compressor 110. In an embodiment, the portion of the compressed working fluid that flows into the lubricant stream 160 is at or about 0.2% to at or about 5% by volume of the working fluid compressed by the compressor 110.

In an embodiment, the lubricant stream 160 may include an optional valve 166 and an optional flow sensor 194 that are utilized by the controller 190 to control the amount of working fluid flowing through the lubricant stream 160 and supplied to the gas bearing 116 similar to the optional valve 66 and flow sensor 94 in Figure 1. In an embodiment, lubricant stream 160 may configured to passively control the amount of working fluid that flows through the lubricant stream 160. For example, the inlet 162 in an embodiment may be sized so that at least the sufficient amount of the working fluid for the bearing 116 flows into the lubricant stream 160 from the main flow path 105.

In an embodiment, the gas bearing 116 may be an aerostatic-hydrostatic hybrid bearing that does not utilize external pressurized gas during normal operation of the compressor 110. In such an embodiment, the lubricant stream 160 may be configured to stop supplying working fluid to the gas bearing 116 when the compressor 110 is not starting up and/or shutting down. For example, the controller 190 in an embodiment may be configured to close the optional valve 166 when the compressor 110 is not starting up and/or shutting down.

Figure 3 is a schematic diagram of a heat transfer circuit 201 according to an embodiment. In an embodiment, the heat transfer circuit 201 may be employed in an HVACR system. The heat transfer circuit 201 is similar to the heat transfer circuit 1 in Figure 1, except with respect to the configuration of the lubricant stream 260. For example, the heat transfer circuit 201 includes main flow path 205; a compressor 210 with a suction inlet 212, an outlet 214, and at least one gas bearing 216; a condenser 230; an expansion device 240; and an evaporator 250 similar to the heat transfer circuit 1 in Figure 1. The condenser 230 utilizes a first process fluid PF₁ to cool working fluid flowing through the condenser 230, and the evaporator 250 utilizes the working fluid flowing through the evaporator 250 to cool a second process fluid PF2 similar to the heat transfer circuit 1 in Figure 1. As similarly discussed regarding the heat transfer circuit 1 in Figure 1, the heat transfer circuit 201 in an embodiment may include additional components than those shown in Figure 3. In an embodiment, the heat transfer circuit 201 is oil-free and lubricated by the refrigerant(s) of the working fluid.

The lubricant stream 260 supplies the compressed working fluid to the gas bearing 216 of the compressor 210 similar to the lubricant stream 60 in Figure 1. The lubricant stream 260 includes an inlet 262, and outlet 264, and a heater 280 disposed between the inlet 262 and the outlet 264. The heater 280 is a heat exchanger that includes a first side 282 and a second side 284. Fluids flowing through the first side 282 and the second side 284 of the heater 280 exchange heat but do not physically mix. Compressed working fluid enters the lubricant stream 260 through the inlet 262 and exits the lubricant stream 260 through the outlet 264. The compressed working fluid in the lubricant stream 260 flows from the inlet 262 of the lubricant stream 260 to the heater 280, through the first side 282 of the heater 280, and from the heater 280 to outlet 264. The working fluid flows from the outlet 264 of the lubricant stream 260 to the gas bearing 216 of the compressor 210 to lubricate the gas bearing 216. In an embodiment, the heater 280 is a heat source of the heat transfer circuit 201.

A cooling circuit 270 is configured to cool a motor 218 of the compressor 210. A third process PF₃ fluid flows through the cooling circuit 270 and is a medium for transferring heat from the motor 218 of the compressor 210 to cool the motor 218. In an embodiment, the third process fluid PF₃ may be air, water and/or glycol, or the like that is suitable for absorbing and transferring heat from the motor 218 to another fluid (e.g., the working fluid). The third process fluid PF₃ may flow along surfaces of the motor 218 and absorb heat from the motor 218. For example, the motor 218 may include a stator (not shown) and a rotor (not shown) and the third process fluid PF₃ may be directed along the surfaces of the stator and/or rotor so as to absorb heat from the motor 218.

In an embodiment, after being heated by the motor 218, the third process fluid PF₃ flows from motor 218 to the heater 280, through the second side 284 of the heater 280, from the heater 280 to and through a pump 274, and from the pump 274 back to the motor 218. The pump 274 is configured to circulate the third process fluid PF₃ through the cooling circuit 270.

The cooling circuit 270 in Figure 3 includes the motor 218, the pump 274, and the heater 280. However, it should be appreciated that the cooling circuit 270 in an embodiment may be modified to move or not include the pump 274, and/or to include additional components such as, for example, valve(s), sensor(s) (e.g., a flow sensor, a temperature sensor), a receiver tank, or the like.

The working fluid flowing through the first side 282 of the heater 280 absorbs heat from the third process fluid PF₃ in the second side 284 of the heater 280, which cools the third process fluid PF₃. Accordingly, the working fluid flowing through the first side 282 is heated as it absorbs the heat from the third process fluid PF₃ in the second side 284. The cooled third process fluid PF₃ then flows from the heater 280 back to the motor 218 of the compressor 210.

The heat transfer circuit 201 includes a controller 290. In an embodiment, the controller 290 may be the controller of the HVACR. The lubricant stream 260 includes a temperature sensor 292 similar to the temperature sensor 92 in Figure 1. The temperature sensor 292 senses the temperature T₁ of the working fluid after being heated by the heater 280. The controller 290 may operate the heat transfer circuit so that the portion of the working fluid supplied to the gas bearing from the lubricant stream has the desired amount of superheat. The controller 290 can operate the heater 280 based on the temperature T₁ so that the working fluid supplied to the gas bearing 216 from the lubricant stream 260 has the desired amount of superheat. For example, the controller 290 may control operation of the pump 274 so that the working fluid provided to the gas bearing 216 by the lubricant stream 260 has the desired amount of superheat. The desired amount of superheat can be the same as disused above regarding the lubricant stream 60 in Figure 1.

A portion of the compressed working fluid that is discharged from the compressor 210 flows into the lubricant stream 260 instead of flowing to the condenser 230. In an embodiment, the portion of the compressed working fluid that flows into the lubricant stream 260 is at or about 0.2% to at or about 5% by volume of the working fluid discharged from the compressor 210. In an embodiment, the portion of the compressed working fluid that flows into the lubricant stream 260 is at or about 0.2% to at or about 5% by volume of the working fluid compressed by the compressor 210. In an embodiment, the lubricant stream 260 may include an optional valve 266 and an optional flow sensor 294 that are utilized by the controller 290 to control the amount of working fluid flowing through the lubricant stream 260 and supplied to the gas bearing 216 similar to the valve 66 and flow sensor 94 in Figure 1. In an embodiment, lubricant stream 260 may configured to passively control the amount of working fluid that flows through the lubricant stream 260. For example, the inlet 262 in an embodiment may be sized so that at least the sufficient amount of the working fluid for the bearing 216 flows into the lubricant stream 260 from the main flow path 205.

In an embodiment, the gas bearing 216 may be an aerostatic-hydrostatic hybrid bearing that does not utilize external pressurized gas during normal operation of the compressor 210. In such an embodiment, the lubricant stream 260 may be configured to stop supplying working fluid to the gas bearing 216 when the compressor 210 is not starting up and/or shutting down. For example, the controller 290 in an embodiment may be configured to close the optional valve 266 when the compressor 210 is not starting up and/or shutting down.

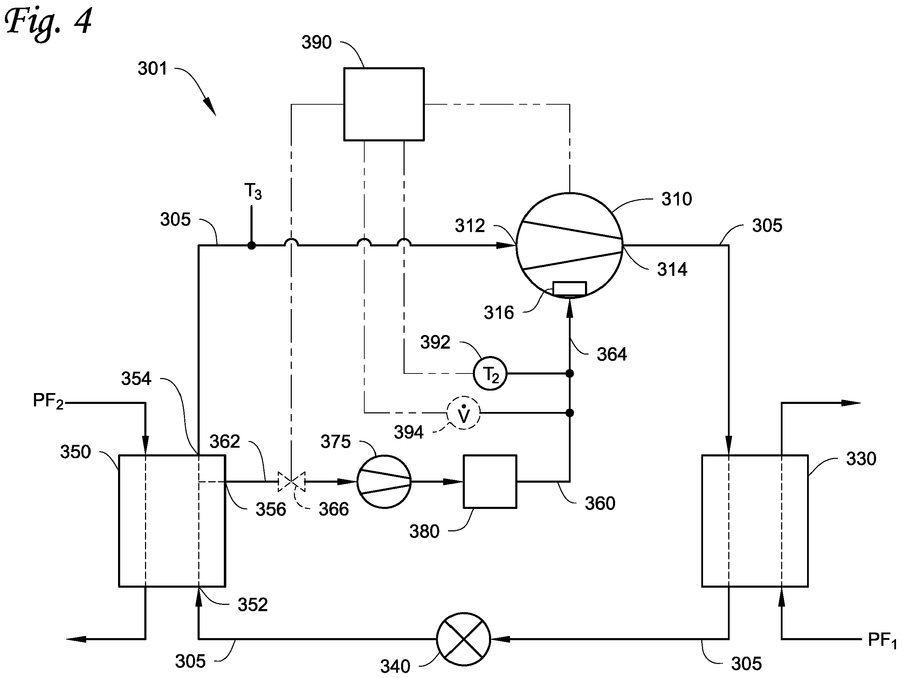

Figure 4 is a schematic diagram of a heat transfer circuit 301 according to an embodiment. In an embodiment, the heat transfer circuit 301 may be employed in an HVACR system. The heat transfer circuit 301 is similar to the heat transfer circuit 1 in Figure 1, except with respect to a lubricant stream 360. For example, the heat transfer circuit 301 includes main flow path 305; a compressor 310 with a suction inlet 312, an outlet 314, and at least one gas bearing 316; a condenser 330; an expansion device 340; and an evaporator 350. The condenser 330 utilizes a first process fluid PF₁ to cool working fluid flowing through the condenser 330, and the evaporator 350 utilizes the working fluid flowing through the evaporator 350 to cool a second process fluid PF₂ similar to the heat transfer circuit 1 in Figure 1. As similarly discussed regarding the heat transfer circuit 1 in Figure 1, the heat transfer circuit 301 in an embodiment may include additional components than those shown in Figure 4. In an embodiment, the heat transfer circuit is oil-free and lubricated by the refrigerant(s) of the working fluid.

The lubricant stream 360 supplies compressed working fluid to the gas bearing 316 of the compressor 310. The lubricant stream 360 includes an inlet 362, an outlet 364, an auxiliary compressor 375, and a heater 380. The auxiliary compressor 375 and the heater 380 are disposed between the inlet 362 and the outlet 364. In Figure 1, the inlet 362 of the lubricant stream 360 is connected to the evaporator 350, and the outlet 364 of the lubricant stream 360 is connected to the compressor 310. In an embodiment, the heater 380 is a heat source of the heat transfer circuit 301.

The evaporator 350 includes an inlet 352, a first outlet 354, and a second outlet 356. After being expanded by the expansion device 340, the working fluid flows from the expansion device 340 to the inlet 352 of the evaporator 350. After entering the evaporator 350 through the inlet 352, the working fluid flows through the evaporator 350 and is discharged from the evaporator 350 through the first outlet 354 and the second outlet 356. A majority of the working fluid that enters the evaporator 350 is discharged through the first outlet 354. After being discharged from the first outlet 354, the working fluid flows from the evaporator 350 to the suction inlet 312 of the compressor 310. The lubricant stream 360 receives its working fluid from the evaporator 350. The working fluid discharged from the second outlet 356 flows into the inlet 362 of the lubricant stream 360. The inlet 362 of the lubricant stream 360 is fluidly connected to the second outlet 356 of the evaporator 350. In an embodiment, the inlet 362 of the lubricant stream 360 is directly connected to the second outlet 356 of the evaporator 350.

In Figure 4, the inlet 362 of the lubricant stream 360 is connected to the evaporator 350. However, it should be appreciated that the inlet 362 of the lubricant stream 360 in an embodiment the inlet 362 may be connected to the main flow path 305 of the heat transfer circuit 301 after the evaporator 350 and before the compressor 110.

The working fluid enters the lubricant stream 360 through the inlet 362 and exits the lubricant stream 360 through the outlet 364. The working fluid flows through the lubricant stream 360 by flowing from the inlet 362 through the auxiliary compressor 375, through a heater 380, and from the heater 380 to the outlet 364. In an embodiment, the positions of the auxiliary compressor 375 and the heater 380 in the lubricant stream 360 may be reversed. The working fluid flows from the outlet 364 of the lubricant stream 360 to the gas bearing 316 of the compressor 310. The working fluid flows from the lubricant stream 360 to the gas bearing 316 of the compressor 310 to lubricate the gas bearing 316.

The working fluid flowing through the auxiliary compressor 375 is compressed to a higher pressure. In an embodiment, the auxiliary compressor 375 may be a positive displacement or centrifugal compressor. In an embodiment, the auxiliary compressor 375 may be an oil-free compressor. The auxiliary compressor 375 is configured to compress the working fluid so that the working fluid provided to the gas bearing 316 has an adequate pressure. For example, the pressure and/or amount of working fluid necessary for the gas bearing 316 to adequately support its load may be known for each operating condition of the compressor 310 based on the configuration of the compressor 310 and/or previous testing of the compressor 310. The compressed working fluid flows from the auxiliary compressor 375 to the heater 380. The heater 380 heats the compressed working fluid so that the compressed working fluid has the desired amount of superheat when supplied to the gas bearing 316. The desired amount of superheat can be the same as discussed above regarding the lubricant stream 60 in Figure 1. In an embodiment, the gas bearing 316 of the compressor 310 may be configured to utilize pressurized working fluid during a shutdown and/or a startup of the compressor 310. The lubricant stream 360 is able to advantageously provide working fluid at the pressure and amount for the gas bearing 316 to operate correctly when the compressor 310 is shutdown, shutting down, and/or starting up.

In an embodiment, the heater 380 in Figure 4 is an electric heater that utilizes electricity to heat working fluid as similarly discussed above with respect to the electric heater 80 in Figure 1. However, it should be appreciated that the heater 380 in an embodiment may be a heat exchanger that heats the working fluid with a third process fluid (e.g., heater 180, heater 280, and the like). For example, third process fluid may flow through a cooling circuit (e.g., cooling circuit 170, cooling circuit 270, and the like) and be configured to cool a device in the cooling circuit (e.g., heat generating component 172, motor 218, and the like).

The heat transfer circuit 301 includes a controller 390. In an embodiment, the controller 390 may be the controller of the HVACR. The lubricant stream 360 includes a temperature sensor 392 similar to the temperature sensor 92 in Figure 1. The temperature sensor 392 senses the temperature T₂ of the working fluid after being heated by the heater 380. The controller 390 is configured to control the heating provided by the heater 380 to the working fluid flowing through the heater 380 so that the working fluid supplied to the gas bearing 316 has the desired amount of superheat. The controller 390 may control the amount of heat provided by the heater 380 to the working fluid based on the temperature T₂. The temperature T₂ of the working fluid after passing through heater 380 is greater than the temperature T₃ of the working fluid entering the suction inlet 312 of the compressor 310.

A portion of the working fluid that enters the evaporator 350 flows into the lubricant stream 360 instead of exiting the evaporator 350 and flowing into the suction inlet 312 of the compressor 310. In an embodiment, at or about 0.2% to at or about 5% by volume of the working fluid that enters the evaporator 350 flows into the lubricant stream 360. In an embodiment, the portion of the compressed working fluid that flows into the lubricant stream 360 is at or about 0.2% to at or about 5% by volume of the working fluid compressed by the compressor 310. In an embodiment, the lubricant stream 360 may include an optional valve 366 and optional flow sensor 394 that are utilized by the controller 390 to control the amount of working fluid flowing through the lubricant stream 360 and supplied to the gas bearing 316 similar to the optional valve 66 and flow sensor 94 in Figure 1. In an embodiment, the auxiliary compressor 375 may be variable speed and the controller 390 may control speed of the auxiliary compressor 375 to control the amount of working fluid 360 supplied to the gas bearing 316. In an embodiment, lubricant stream 360 may configured to passively control the amount of working fluid that flows through the lubricant stream 360. For example, the inlet 362 in an embodiment may be sized so that at least the sufficient amount of the working fluid for the bearing 316 flows into the lubricant stream 360 from evaporator 350. In an embodiment, the auxiliary compressor 375 may be sized so that the lubricant stream 360 provides at least the sufficient amount of the working fluid to the gas bearing 316.

In an embodiment, the gas bearing 316 may be an aerostatic-hydrostatic hybrid bearing that does not utilize external pressurized gas during normal operation of the compressor 310. In such an embodiment, the lubricant stream 360 may be configured to stop supplying working fluid to the gas bearing 316 when the compressor 310 is not starting up and/or shutting down. For example, the controller 390 in an embodiment may be configured to close the optional valve 366 when the compressor 310 is not starting up and/or shutting down. For example, the controller 390 in an embodiment may be configured to shut-down the auxiliary compressor 375 when the compressor 310 is not starting up and/or shutting down

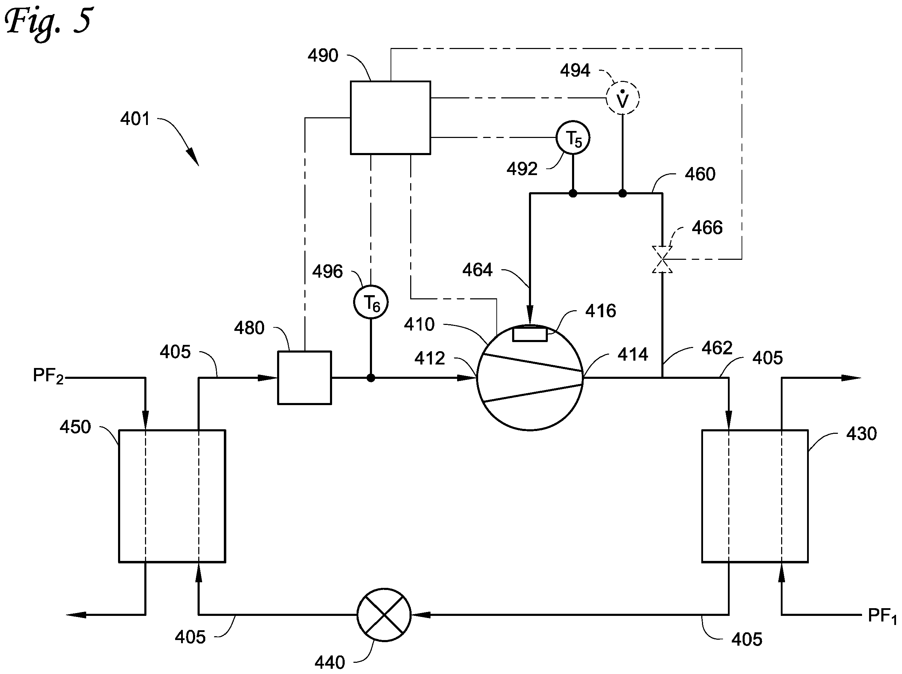

Figure 5 is a schematic diagram of a heat transfer circuit 401 according to an embodiment. In an embodiment, the heat transfer circuit 401 may be employed in an HVACR system. The heat transfer circuit 401 is similar to the heat transfer circuit 1 in Figure 1, except with respect to the heater 480. For example, the heat transfer circuit 401 includes a main flow path 405; a compressor 410 with a suction inlet 412, an outlet 414, and at least one gas bearing 416; a condenser 430; an expansion device 440; and an evaporator 450. The condenser 430 utilizes a first process fluid PF₁ to cool working fluid flowing through the condenser 430, and the evaporator 450 utilizes the working fluid flowing through the evaporator 450 to cool a second process fluid PF₂ similar to the heat transfer circuit 1 in Figure 1. As similarly discussed above regarding the heat transfer circuit 1 in Figure 1, the heat transfer circuit 401 in an embodiment may include additional components than those shown in Figure 5. In an embodiment, the heat transfer circuit 401 is oil-free and lubricated by the refrigerant(s) of the working fluid.

The lubricant stream 460 supplies compressed working fluid to the gas bearing 416 of the compressor 410 similar to the lubricant stream 60 in Figure 1. The lubricant stream includes an inlet 462 and an outlet 464. The inlet 462 of the lubricant stream 460 connects to the main flow path 405 of the heat transfer circuit 401 between the compressor 410 and the condenser 430. A portion of the compressed working fluid that is discharged from the compressor 410 flows into the lubricant stream 460 instead of flowing to the condenser 430. The lubricant stream 460 supplies the portion of compressed working fluid to the gas bearing 416 of the compressor 410 to lubricate the gas bearing 416.

As shown in Figure 5, the heater 480 is located between the evaporator 450 and the compressor 410. After being heated in the evaporator 450, the working fluid discharged by the evaporator 450 flows from the evaporator 450 to the heater 480. The working fluid flows through the heater 480 and is further heated. The working fluid then flows from heater 480 to the suction inlet 412 of the compressor 410. The working fluid is compressed by the compressor 410 as it flows through the compressor 410, and compressed working fluid is discharged from the outlet 414 of the compressor 410.

The heater 480 is configured to heat the working fluid provided to the compressor 410 such that the compressed working fluid provided to the gas bearing 416 by the lubricant stream 460 has the desired superheat. As discussed above, the working fluid increases in temperature as the working fluid undergoes compression in the compressor 410. The temperature T₅ of the working fluid discharged from the compressor 410 is greater than the temperature T₆ of the working fluid entering the suction inlet 412 of the compressor 110. In an embodiment, the working fluid discharged from the outlet 414 of the compressor 410 has the desired amount of superheat while the working fluid after the heater 480 and before the compressor 410 does not have the desired amount of superheat. The desired amount of superheat can be the same as discussed above regarding the lubricant stream 60 in Figure 1. In an embodiment, the heater 480 is a source of the heat transfer circuit 401.

The heat transfer circuit 401 includes a controller 490. In an embodiment, the controller 490 may be the controller of the HVACR. The controller 490 controls the heater 480. The controller 490 controls the amount of heat provided by the heater 480 to the working fluid flowing through the heater 480 so that the working fluid supplied to the gas bearing 416 from the lubricant stream 460 has the desired amount of superheat. The temperature T₅ of the working fluid supplied to the gas bearing 416 (e.g., the temperature of the working fluid at the outlet 464) may be determined directly or indirectly. In an embodiment, the lubricant stream 460 includes a temperature sensor 492 that senses the temperature T₅ of the working fluid flowing through the lubricant stream 460. In an embodiment, the temperature sensor 492 may be located in the lubricant stream 460, at the outlet 414 of the compressor 410, or between the outlet 414 of the compressor 410 and the inlet 462 of the lubricant stream 460. In an embodiment, a temperature sensor 496 is located after the heater 480 and before the compressor 410 and senses the temperature T₆ of the working fluid discharged from the heater 480. For example, the temperature T₅ of the working fluid supplied from the lubricant stream 460 may be determined based on the temperature T₆. The controller 492 may control the amount of heat provided by the heater 480 to the working fluid based on at least one of the temperature T₅ and the temperature T₆.

A portion of the compressed working fluid that is discharged from the compressor 410 flows into the lubricant stream 460 instead of flowing to the condenser 430. In an embodiment, the portion of the compressed working fluid that flows into the lubricant stream 460 is at or about 0.2% to at or about 5% by volume of the working fluid discharged from the compressor 410. In an embodiment, the portion of the compressed working fluid that flows into the lubricant stream 460 is at or about 0.2% to at or about 5% by volume of the working fluid compressed by the compressor 410.

In an embodiment, the lubricant stream 460 may include an optional valve 466 and an optional flow sensor flow sensor 494 that are utilized by the controller 490 to control the amount of working fluid flowing through the lubricant stream 460 and supplied to the gas bearing 416 similar to the optional valve 66 and the flow sensor 94 in Figure 1. In an embodiment, lubricant stream 460 may configured to passively control the amount of working fluid that flows through the lubricant stream 460. For example, the inlet 462 in an embodiment may be sized so that at least the sufficient amount of the working fluid for the gas bearing 416 flows into the lubricant stream 460 from the main flow path 405.

In an embodiment, the gas bearing 416 may be an aerostatic-hydrostatic hybrid bearing that does not utilize external pressurized gas during normal operation of the compressor 410. In such an embodiment, the lubricant stream 460 may be configured to stop supplying working fluid to the gas bearing 416 when the compressor 410 is not starting up and/or shutting down. For example, the controller 490 in an embodiment may be configured to close the optional valve 466 when the compressor 410 is not starting up and/or shutting down.

In an embodiment, the heater 480 in Figure 5 is an electric heater that utilizes electricity to heat the working fluid as similarly discussed above for the heater 80 in Figure 1. However, it should be appreciated that the heater 480 in an embodiment may be a heat exchanger that heats the working fluid with a third process fluid (e.g., heater 180, heater 280, and the like). For example, the third process fluid may flow through a cooling circuit (e.g., cooling circuit 170, cooling circuit 270, and the like) and cool one or more devices that need cooling (e.g., heat generating component 172, motor 218, and the like).

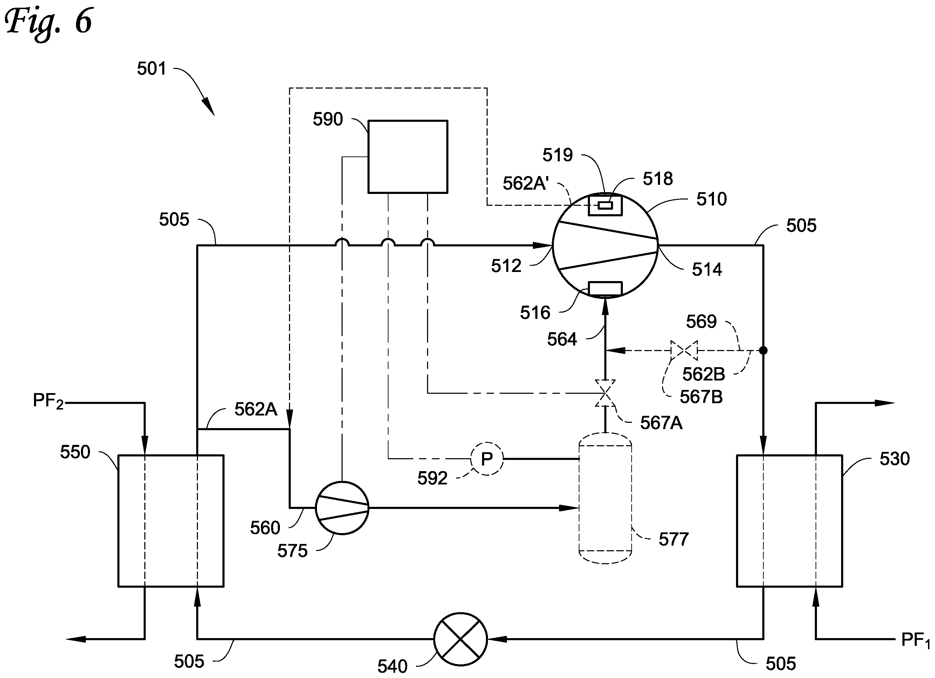

Figure 6 is a schematic diagram of a heat transfer circuit 501 according to an embodiment. In an embodiment, the heat transfer circuit 501 may be employed in an HVACR system. The heat transfer circuit 501 is similar to the heat transfer circuit 1 in Figure 1, except with respect to a lubricant stream 560. For example, the heat transfer circuit 501 includes a main flow path 505; a compressor 510 with a suction inlet 512, an outlet 514, and at least one gas bearing 516; a condenser 530; an expansion device 540; an evaporator 550; and a controller 590. The condenser 530 utilizes a first process fluid PF₁ to cool the working fluid flowing through the condenser 530, and the evaporator 550 utilizes the working fluid flowing through the evaporator 550 to cool a second process fluid PF₂ similar to the heat transfer circuit 1 in Figure 1. As similarly discussed regarding the heat transfer circuit 1 in Figure 1, the heat transfer circuit 501 in an embodiment may include additional components than those shown in Figure 6. In an embodiment, the controller 590 may be the controller of the HVACR system. In an embodiment, the heat transfer circuit 501 is oil-free and lubricated by the refrigerant(s) of the working fluid.

In an embodiment, an aerostatic gas bearing needs compressed gas at a minimum pressure and/or flowrate to provide support (e.g., to support a shaft of the compressor 510). In an embodiment, an aerodynamic-aerostatic hybrid gas bearing needs compressed gas at a minimum pressure and/or flowrate to provide support until the shaft reaches a specific rotational speed. The amount of compressed gas, minimum pressure for the compressed gas, and/or the specific shaft rotational speed for a gas bearing to provide support are dependent upon the configuration of the specific aerostatic or aerodynamic-aerostatic hybrid gas bearing. When not provided with at least the minimum pressure of gas, the minimum amount of gas, and/or the shaft is rotating below the specific rotational speed, the gas bearing contacts its opposing surface (e.g., an outer surface of a shaft of the compressor, a surface of the housing of the compressor, or the like) which leads to wear and/or damage of the gas bearing.

The lubricant stream 560 supplies compressed working fluid to the gas bearing 516 of the compressor 510. The lubricant stream 560 includes a first inlet 562A, an outlet 564, an optional valve 567A, an auxiliary compressor 575, and an optional tank 577. The first inlet 562A, the auxiliary compressor 575, and the optional tank 577 are configured to supply compressed gaseous working fluid to the gas bearing 516 during start-up and/or shutdown of the compressor 510.

The auxiliary compressor 575 during a start-up and/or shutdown of the compressor 510 suctions and compresses gaseous working fluid from the evaporator 550 via the inlet 562A. In an embodiment, the compressed gaseous working fluid flows from the auxiliary compressor 575 to the outlet 564 and is supplied to the gas bearing 516 of the compressor 510 until the compressor completes its start-up. In an embodiment, the auxiliary compressor 575 supplies compressed gaseous working fluid to the gas bearing 510 during a shutdown of the compressor 510 until the compressor 510 is shutdown (e.g., until a shaft of the compressor 510 is no longer rotating). The auxiliary compressor 575 generates the compressed gaseous working fluid used by the gas bearing 516 during the shutdown and/or startup of the compressor 510.

In an embodiment, the lubricant stream 560 includes an optional tank 577 and an optional valve 567A. The tank 577 is between the auxiliary compressor 575 and the outlet 564 of the lubricant stream 560. The valve 567A is between the tank 577 and the outlet of the lubricant stream 560. The optional tank 577 and optional valve 567A are used for charging a specific amount of compressed gaseous working fluid in the tank 577 for use during a shutdown and/or startup of the compressor 560. In an embodiment, the auxiliary compressor 575 discharges compressed gaseous working fluid into the tank 577. The valve 567A is closed such that the working fluid builds up and is compressed within the tank 577. The valve 567A is opened once the tank 577 contains compressed gaseous working fluid that is sufficient to supply the gas bearing 516 with its minimum amount and pressure of compressed gas to operate until the shutdown or startup is completed. The compressed gaseous working fluid then flows from the tank 577 to the outlet 564 of the lubricant stream 560 and is supplied to the gas bearing 516 from the lubricant stream 560. In an embodiment, the optional valve 567A is controlled by the controller 590. In an embodiment, the heat transfer circuit 501 includes an optional pressure sensor 592 that is utilized by the controller 590 to detect the pressure of the working fluid in the tank 577.

In an embodiment, the auxiliary compressor 575 has a smaller capacity than the compressor 510. In an embodiment, the lower efficiency of the auxiliary compressor 575 results in a greater heating of the compressed working fluid discharged from the auxiliary compressor 575. In an embodiment, this greater heating may provide the compressed working fluid with an increased superheat as similarly discussed above. In an embodiment, the auxiliary compressor 575 is a heat source of the heat transfer circuit 501.

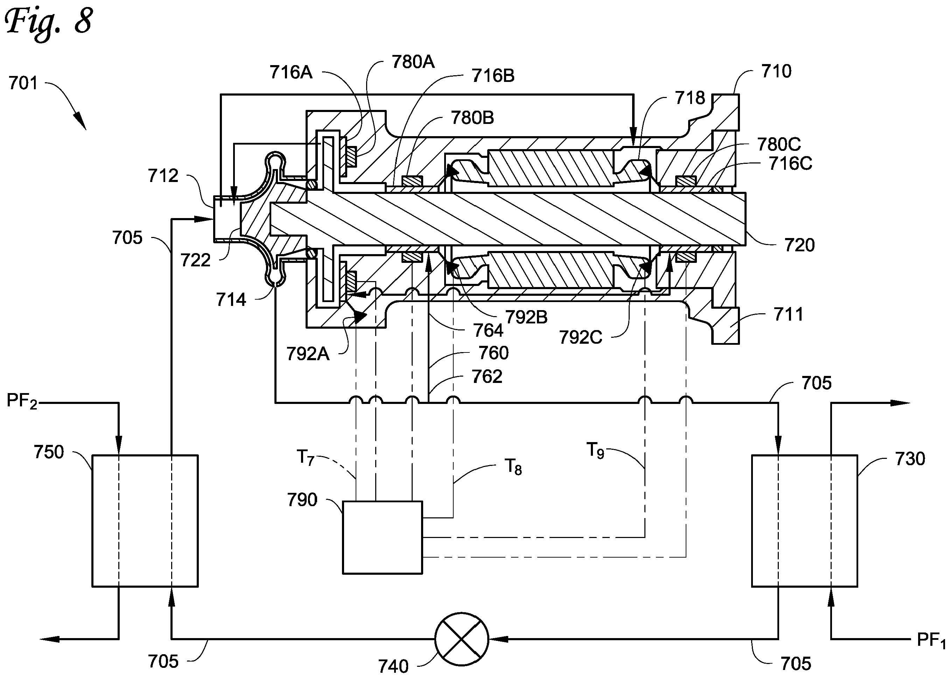

In an embodiment, the gas bearing 516 is a hybrid aerostatic-hydrodynamic bearing. The lubricant stream 560 provides compressed gaseous working fluid to the gas bearing 516 until the shaft (e.g., shaft 720 in Figure 8) is rotating at the minimum speed for the hybrid aerostatic-hydrodynamic gas bearing 516 to provide support.

In an embodiment, the gas bearing 516 is an aerostatic bearing, and the lubricant stream 560 includes an optional inlet line 569 with an optional second inlet 562B and an optional valve 567B. Once the compressor 510 is able to generate sufficient compressed gaseous working fluid for the aerostatic gas bearing 516 (e.g., when the compressor is not shutting down or starting up), a portion of the gaseous compressed working fluid enters the lubricant stream 560 from the main flow path 505 via the second inlet 562B. The portion of the gaseous compressed working fluid is then supplied to the aerostatic gas bearing 516 by the lubricant stream. The valve 567B prevents the compressed working fluid discharged from the auxiliary compressor 575 from flowing into the main flow path 505. In an embodiment, the valve 567B may be a check valve or a control valve operated by the controller 590.

In an embodiment, the optional inlet line 569 may have a configuration similar to the lubricant stream 60 in Figure 1, the lubricant stream 160 in Figure 2, or the lubricant stream 260 in Figure 3. For example, the lubricant stream 560 may also include a heater (e.g., heater 80, 180, 280) located between the optional second inlet 562B and the outlet 564 of the lubricant stream 560 to increase the superheat of the gaseous working fluid flowing from the second inlet 562B to the outlet 564. In an embodiment, the heat transfer circuit 501 may include a heater (e.g., heater 480) disposed between the evaporator 550 and the suction inlet 512 of the compressor 510 similar to the heat transfer circuit 401 in Figure 5.

In Figure 6, the first inlet 562A of the lubricant stream 560 is connected to the main flow path 505 between the evaporator 550 and the suction inlet 512 of the compressor 510. However, it should be appreciated that the first inlet 562A of the lubricant stream 560 in an embodiment may be fluidly connected to a motor housing 519 for the motor 518 of the compressor 510 (shown as 562A' in Figure 6). Working fluid may be circulated through the motor housing 519 and along the motor 518 to cool the motor 518 as similarly discussed above with respect to Figure 3. In an embodiment, the first inlet 562A' is fluidly connected to the motor housing 519 and the working fluid suctioned by the auxiliary compressor 575 is from the motor housing 519 instead of from between the evaporator 550 and the compressor 510. For example, this configuration can advantageously avoid generating a pressure difference between the gas bearing 516 and the evaporator 550 and/or suction inlet 512. The motor 518 and motor housing 519 are shown in Figure 6 as internal to the compressor 510 in Figure 6. However, it should be appreciated that the motor 518 and motor housing 519 may be externally attached to the compressor 510 in an embodiment.

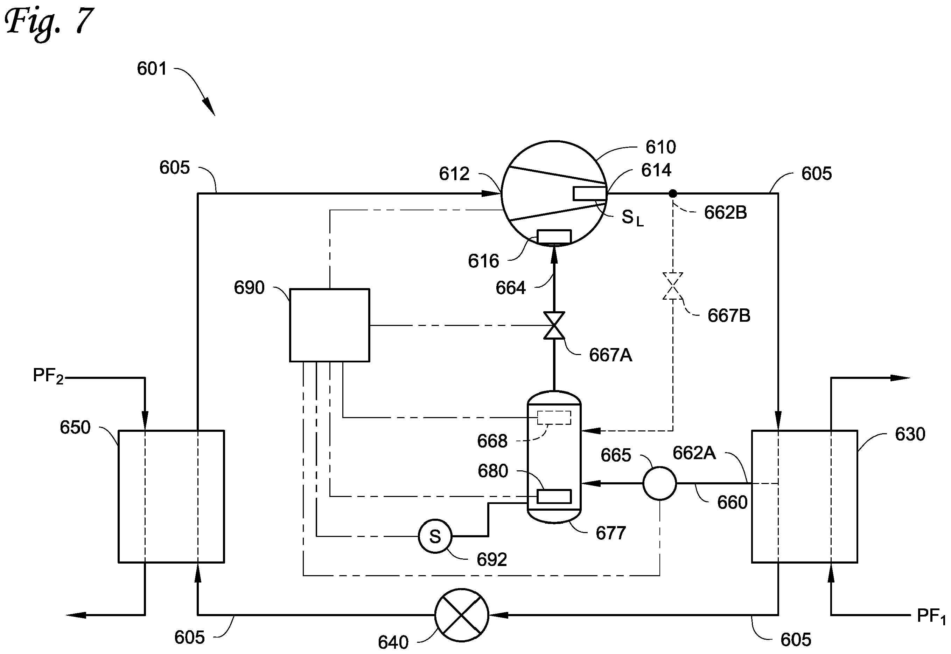

Figure 7 is a schematic diagram of a heat transfer circuit 601 according to an embodiment. In an embodiment, the heat transfer circuit 601 may be employed in an HVACR system. The heat transfer circuit 601 is similar to the heat transfer circuit 1 in Figure 1, except with respect to a lubricant stream 660. For example, the heat transfer circuit 601 includes a main flow path 605; a compressor 610 with a suction inlet 612, an outlet 614, and at least one gas bearing 616; a condenser 630; an expansion device 640; an evaporator 650; and a controller 690. The condenser 630 utilizes a first process fluid PF₁ to cool working fluid flowing through the condenser 630, and the evaporator 650 utilizes the working fluid flowing through the evaporator 650 to cool a second process fluid PF₂ similar to the heat transfer circuit 1 in Figure 1. In an embodiment, the controller 690 may be the controller of a HVACR system. As similarly discussed regarding the heat transfer circuit 1 in Figure 1, the heat transfer circuit 601 in an embodiment may include additional components than those shown in Figure 7. In an embodiment, the heat transfer circuit 601 is oil-free and lubricated by the refrigerant(s) of the working fluid.

The lubricant stream 660 supplies compressed working fluid to the gas bearing 616 of the compressor 610. The lubricant stream 660 includes an inlet 662A, an outlet 664, a tank 677, a valve 667A, a pump 665, and a heater 680. In an embodiment, the inlet 662A of the lubricant stream 660 is connected to the main flow path 605 at the condenser 630. The inlet 662A of the lubricant stream 660 is connected to and receives working fluid from the condenser 630.

In an embodiment, when the compressor 610 is to be started up, a pump 665 is configured to pump liquid working fluid from the condenser 630 into the tank 677. After a predetermined amount of working fluid is pumped into the tank 677, a heater 680 heats the liquid working fluid in the tank 677 until the liquid working fluid begins to vaporize. The valve 667A is closed causing the gaseous working fluid to be compressed within the tank 677. Once the compressed gaseous working fluid in the tank 677 reaches a predetermined pressure, the valve 667A is opened and compressed gaseous working fluid flows from the tank 677 to the outlet 664 of the lubricant stream 660. The lubricant stream 660 supplies the compressed gaseous working fluid to the gas bearing 616 of the compressor 610. The predetermined pressure of gaseous working fluid is a pressure that allows the lubricant stream 660 to supply a sufficient compressed gaseous working fluid to the gas bearing 616 for the gas bearing 616 to provide support, for example, until the compressor 610 completes its startup. For example, the predetermined amount of liquid working fluid is an amount that allows for the tank to build the sufficient amount and pressure of compressed gaseous working fluid for the gas bearing 616. In an embodiment, a controller 690 may utilize one or more sensors 692 to detect the pressure, temperature, and/or liquid level of fluid within the tank 677.

In an embodiment, the gas bearing 616 may be an aerostatic bearing that needs a continuous stream of compressed gas to provide support. The lubricant stream 660 may include an optional second inlet 662B for supplying compressed gaseous working fluid to the aerostatic gas bearing 616 from the compressor 610 when the compressor is discharging sufficient compressed gaseous working fluid (e.g., not during a shutdown or startup of the compressor 610). In an embodiment, the lubricant stream 660 may include an optional valve 667B to prevent fluid from flowing from the tank 677 into the main flow path 605 through the optional second inlet 662B. For example, the optional valve 667B may be a check valve or a control valve operated by the controller 690. In an embodiment, a portion of the compressed working fluid discharged from the outlet 614 of the compressor 610 flows into the lubricant stream 660 through the second inlet 662B. The heater 680 then heats the compressed gaseous working fluid flowing through the lubricant stream 660 so that the compressed gaseous working fluid provided to the gas bearing 616 has a higher superheat as similarly discussed above regarding the lubricant stream 60 in Figure 1.

The heater 680 is a heat source of the heat transfer circuit 601 in an embodiment. In an embodiment, the heater 680 is an electric heater. In an embodiment, the heater 680 is a heat exchanger that utilizes a third process fluid (e.g., third process fluid PF3 in Figure 2). In an embodiment, the heat transfer circuit 601 may include a heater disposed between the evaporator 650 and the suction inlet 612 of the compressor 610 in the main flow path 605 similar to the heat transfer circuit 401 in Figure 5 (e.g., heater 480).

In an embodiment, the lubricant stream 660 may include a thermoelectric cooler 668 instead of the pump 665 to add liquid working fluid to the tank 677. The thermoelectric cooler 668 is able to provide cooling utilizing electricity. In an embodiment, the controller 690 supplies electricity to the thermoelectric cooler 668 and the thermoelectric cooler 668 cools the fluid within the tank 677 using the supplied electricity. The thermoelectric cooler 668 is located within the tank 677 and is configured to condense gaseous working fluid within the tank 677. As the gaseous working fluid is condensed in the tank 677, more gaseous working fluid is suctioned into the tank 677 and condensed. In such an embodiment, the inlet 662A of the lubricant stream 660 is connected to the main flow path 605 before the condenser 630 and after the suction inlet 612 of the compressor 610 instead of to the condenser 630. For example, in such an embodiment, the lubricant stream 660 may include the inlet 662B instead of the inlet 662A, or the inlet 662A may be connected to the final stage S_{L} of the compressor 610 instead of the condenser 630. The thermoelectric cooler 668 remains on until the tank 677 contains at least the predetermined amount of liquid working fluid as similarly discussed above regarding the pump 665. In an embodiment, the controller 690 controls the thermoelectric cooler 668.

The description provided above for the heat transfer circuits 1, 101, 201, 301, 401, 501, 601 is described with respect to single gas bearing for clarity. However, it should be understood that a compressor may include multiple gas bearings (e.g., multiple radial gas bearings, multiple thrust gas bearings, a combination of thrust and radial gas bearings, and the like). In an embodiment, a compressor (e.g., compressor 10, 110, 210, 310, 410, 510, 610) may include multiple gas bearings, and the lubricant stream (e.g., lubricant stream 60, 160, 260, 360, 460, 560, 660) supplies compressed gaseous working fluid to each of the gas bearings to sufficiently lubricate each of the gas bearings.

Figure 8 is a schematic diagram of a heat transfer circuit 701 according to an embodiment. In an embodiment, the heat transfer circuit 701 may be employed in an HVACR system. The heat transfer circuit 701 is similar to the heat transfer circuit 1 in Figure 1, except with respect to a lubricant stream 760 and the internal configuration of the compressor 710. For example, the heat transfer circuit 701 includes a main flow path 705; the compressor 710 with a suction inlet 712, an outlet 714, and at least one gas bearing 716A, 716B, 716C; a condenser 730; an expansion device 740; an evaporator 750; and a controller 790. The condenser 730 utilizes a first process fluid PF₁ to cool working fluid flowing through the condenser 730, and the evaporator 750 utilizes the working fluid flowing through the evaporator 750 to cool a second process fluid PF₂ similar to the heat transfer circuit 1 in Figure 1. In an embodiment, the controller 790 may be the controller of a HVACR system. As similarly discussed regarding the heat transfer circuit 1 in Figure 1, the heat transfer circuit 701 in an embodiment may include additional components than those shown in Figure 8. In an embodiment, the heat transfer circuit 701 is oil-free and lubricated by the refrigerant(s) of the working fluid.

The compressor 710 includes a motor 718 configured to rotate a shaft 720. An impeller 722 is attached to an end of the shaft 720. As the shaft 720 rotates, the impeller 722 is rotated and compresses the working fluid. As shown in Figure 8, the compressor 710 has a housing 711 that is both the housing for the compressor 710 and for the motor 718. However, the motor 718 in an embodiment may be external to the compressor 710. In an embodiment, the motor 718 may include a housing separate from the housing 711 of the compressor 710.

The lubricant stream 760 supplies compressed working fluid to the gas bearings 716A, 716B, 716C of the compressor 710. The lubricant stream 760 includes an inlet 762 and an outlet 764. A portion of the compressed gaseous working fluid in the main flow path 705 and discharged from the compressor 710 enters the lubricant stream 760 through the inlet 762. The lubricant stream 760 supplies the compressed gaseous working fluid to the gas bearings 716A, 716B, 716C of the compressor 710 via the outlet 764 of the lubricant stream 760. The lubricant stream 760 is shown in Figure 8 extending outside of the housing 711 of the compressor 710. However, the lubricant stream 760 in an embodiment may be incorporated into the housing 711 of the compressor 710.

The lubricant stream 760 supplies compressed gaseous working fluid to the gas bearing 716A to lubricate the gas bearing 716A.The gaseous working fluid expands as the gaseous working fluid flows through the gas bearing 716A. This expansion causes the gaseous working fluid to cool, which also cools the gas bearing 716A. The compressor 710 includes a heater 780A that heats a first gas bearing 716A. The heater 780A prevents the gas bearing 716A from reaching a temperature that would result in the gaseous working fluid condensation within the gas bearing 716A. For example, if the cooling of the gas bearing 716A is not inhibited, the gas bearing 716A can cool the gaseous working fluid as it flows through the gas bearing 716A causing the gaseous working fluid to condense within the gas bearing 716A. The heater 780A is shown as attached to the gas bearing 716A. However, the heater 780 may be incorporated into the gas bearing 716A in an embodiment.

In an embodiment, the controller 790 controls the amount of heat provided by the heater 780A to the gas bearing 716A. A temperature sensor 792A detects the temperature T₇ of the gas bearing 716A. In an embodiment, the temperatures sensor 792A is a thermocouple. In an embodiment, the controller 790 controls the amount of heat provided by the heater 780A to the gas bearing 716A. The amount of heat provided by the heater 780A to the gas bearing 716A at least maintaining the gas bearing 716A at a predetermined temperature T₇. The predetermined temperature T₇ prevents the gaseous working fluid provided to the gas bearing 716A reaching a temperature at which it condenses while flowing through the gas bearing 716A. The predetermined temperature T₇ is at or about 4°F or greater than 4°F then the dew temperature of the working fluid in the gas bearing 716A. The predetermined temperature T₇ is at or about 4.5°F or greater than 4.5°F then the dew temperature of the working fluid in the gas bearing 716A. The predetermined temperature T₇ is at or about 5°F or greater than 5°F then the dew temperature of the working fluid in the gas bearing 716A

The compressor 710 includes a second gas bearing 716B with a second heater 780B and a third gas bearing 716C with a third heater 780C. Each of the second and third heaters 780B, 780C are configured to heat their respective gas bearing 716B, 716C in a similar manner as described for the first gas bearing 716A and first heater 780A. In an embodiment, the compressor 710 includes a temperature sensor 792B for detecting a temperature T₈ of the second gas bearing 716B and a temperature sensor 792C for detecting a temperature T₉ the third gas bearing 716C. The controller 790 may control the amount of heat provided by each heater 780B, 780C to its respective gas bearing 716B, 716C similar to the first heater 780A and the first gas bearing 716A. In an embodiment, each of the heaters 780A, 780B, 780C is a heat source of the heat transfer circuit 701.

The compressor 710 shown in Figure 8 includes three gas bearings 716A, 716B, 716C. However, the compressor 710 in an embodiment may have a different number of bearings than three. In an embodiment, the compressor 710 may have a single gas bearing 716A, 716B, 716C. In an embodiment, the compressor 710 may have one or more gas bearings 716A, 716B, 716C. In an embodiment, the compressor 710 may have at least one thrust gas bearing 716A and at least one radial gas bearing 716B, 716C. The compressor 710 shown in Figure 8 is a single stage compressor. However, the compressor 710 in an embodiment may include multiple stages.

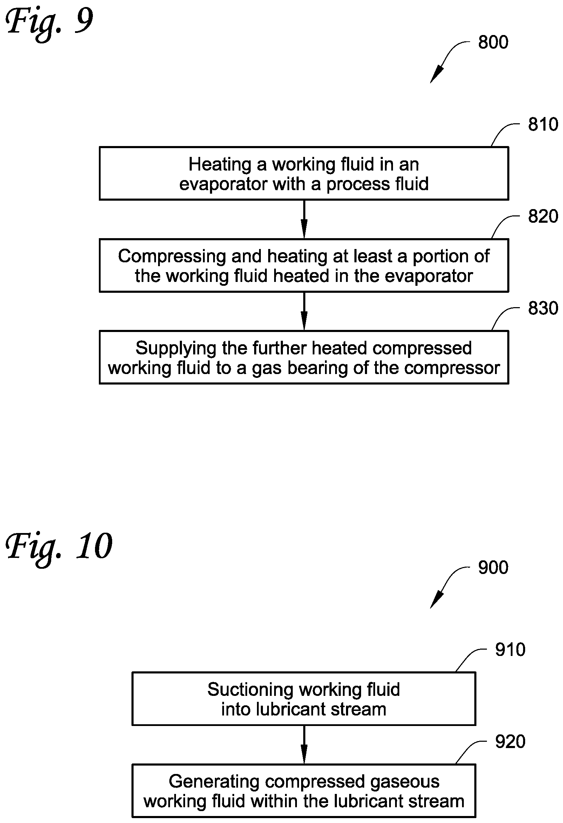

Figure 9 is a block diagram of an embodiment of a method 800 of supplying lubricant to at least one gas bearing of a compressor in a heat transfer circuit. For example, method 800 may be for supplying lubricant to the gas bearing in the heat transfer circuit 1 in Figure 1, in the heat transfer circuit 101 in Figure 2, in the heat transfer circuit 201 in Figure 3, in the heat transfer circuit 301 in Figure 4, in the heat transfer circuit 401 in Figure 5, or in the heat transfer circuit 601 of Figure 7. The lubricant for the gas bearing is a portion of the working fluid flowing in the heat transfer circuit. In an embodiment, the heat transfer circuit is employed in an HVACR system. The method 800 starts at 810.

At 810, a working fluid is heated in an evaporator (e.g., evaporator 50, 150, 250, 350, 450, 650). The evaporator heats the working fluid with a process fluid (e.g., second process fluid PF₂). The working fluid and the process fluid separately flow through the evaporator and are in a heat transfer relationship. The process fluid flowing through the evaporator is cooled as the working fluid flowing through the evaporator absorbs heat from the process fluid. The method 800 then proceeds to 820.

At 820, at least a portion of the working fluid heated in the evaporator is compressed and further heated. The at least a portion of the working fluid is further heated by a heater (e.g., heater 80, 180, 280, 380, 480, 680). The at least a portion of the working fluid is compressed by a compressor (e.g., compressor 10, 110, 210, 410) or an auxiliary compressor (e.g., auxiliary compressor 375).

In an embodiment, 820 includes compressing the working fluid heated in the evaporator with the compressor, then further heating a portion of the compressed working fluid in the heater (e.g., heat transfer circuit 1, 101, 201, 601). The remaining portion of the working fluid may flow to a condenser (e.g., condenser 30, 130, 230, 630). In an embodiment, 820 includes compressing a portion of the working fluid heated in the evaporator with the auxiliary compressor and heating the portion of the working fluid with the heater (e.g., heat transfer circuit 301). The portion of the working fluid may be first compressed by the auxiliary compressor then heated with the heater. Alternatively, the portion of the working fluid may be heated with the heater then compressed with the auxiliary compressor. The remaining portion of the working fluid heated in the evaporator is compressed by the compressor. The method 800 then proceeds to 830.

At 830, the compressed working fluid that has been heated by the heater is supplied to the gas bearing (e.g., gas bearing 16, 116, 216, 316, 416, 616) of the compressor (e.g., compressor 10, 110, 210, 310, 410, 610). The compressed working fluid is supplied to the gas bearing as the lubricant for the gas bearing. The working fluid is heated by the heater so as to have a desired amount of superheat. The desired superheat may be the same as described above with respect to Figure 1.

In an embodiment, the method 800 may be modified based on the heat transfer circuit 1, the heat transfer circuit 101, the heat transfer circuit 201, the heat transfer circuit 301, the heat transfer circuit 401, and the heat transfer circuit 610 as shown in Figures 1 - 5 and 7 and as described above. For example, the method 800 in an embodiment may include the heater utilizing another process fluid (e.g., the third process fluid PF₃ discussed above) to heat the working fluid flowing through the heater, condensing working fluid with a condenser (e.g., condenser 30, 130, 230, 330, 430, 630), and/or expanding the working fluid with an expansion device (e.g., expansion device 40, 140, 240, 340, 440, 640).

Figure 10 is a block diagram of an embodiment of a method 900 of supplying lubricant to at least one gas bearing of a compressor in a heat transfer circuit during at least one of startup and shutdown of a compressor. For example, method 900 may be for supplying lubricant to the gas bearing in the heat transfer circuit 501 in Figure 6, or in the heat transfer circuit 601 in Figure 7. The lubricant supplied to the gas bearing is a portion of the working fluid flowing in the heat transfer circuit. In an embodiment, the heat transfer circuit is employed in an HVACR system. The method 900 starts at 910.

At the 910, working fluid is suctioned into a lubricant stream (e.g., lubricant stream 560, 660) from a main flow path of the heat transfer circuit (e.g., main flow path 505, 605). In an embodiment, gaseous working fluid is suctioned at 910 from an evaporator (e.g., evaporator 550) or a motor housing (e.g., motor housing 519) of the compressor (e.g., compressor 510) by an auxiliary compressor 575. In an embodiment, the working fluid is suctioned at 910 into a tank (e.g., tank 677) from a condenser (e.g., condenser 630) by a pump (e.g., pump 665) or from a last stage of a compressor (e.g., compressor 610) by a thermoelectric cooling device (e.g., thermoelectric cooling device 668). The method 900 then proceeds to 920.

At 920, compressed gaseous working fluid is generated within the lubricant stream from the suctioned working fluid. The compressed gaseous working fluid is supplied to at least one gas bearing of the compressor (e.g., gas bearing 516, 616). The compressed working fluid generated within the lubricant stream is supplied to the gas bearing until the compressor completes its startup and or is shutdown.

In an embodiment, an auxiliary compressor (e.g., auxiliary compressor 575) compresses the suctioned gaseous working fluid to generate compressed gaseous working fluid. In an embodiment, a heater (e.g., heater 680) vaporizes the suctioned liquid working fluid within a tank of the lubricant stream (e.g., tank 677). The gaseous working fluid becomes compressed as the heater vaporizes more liquid working fluid. The compressed gaseous working fluid is then supplied to the gas bearing of the compressor until the compressor completes its startup and/or is shutdown.

In an embodiment, the method 900 may be modified based on the heat transfer circuit 501 and the heat transfer circuit 601 as shown in Figures 6 and 7 and as described above.

### Aspects:

Any of aspects 1 - 17 can be combined with any of aspects 18 - 24, and any of aspects 18 - 20 can be combined with any of aspects 21 - 24.
Aspect 1. A heat transfer circuit, comprising:
   a compressor for compressing a working fluid, the compressor including a gas bearing;
   a condenser for cooling the working fluid with a first process fluid;
   an expander for expanding the working fluid;
   an evaporator for heating the working fluid with a second process fluid;
   a main flow path of the working fluid extending from the compressor through the condenser, the expander, the evaporator, and back to the compressor;
   a lubricant stream including an inlet and an outlet, the inlet receiving a portion of the working fluid from the main flow path and the outlet supplying the portion of the working fluid to the gas bearing of the compressor, the portion of the working fluid includes one or more refrigerants that are each gaseous at the outlet of the lubricant stream; and
   a heat source configured to increase one of a temperature of the working fluid flowing through the outlet of the lubricant stream and a temperature of the gas bearing.
Aspect 2. The heat transfer circuit of aspect 1, wherein the portion of the working fluid supplied to the gas bearing from the lubricant stream has a superheat of at or about 4.0°F or greater than 4.0°F.
Aspect 3. The heat transfer circuit of either one of aspects 1 or 2, wherein the lubricant stream includes the heat source, and the portion of the working fluid at the inlet of the lubricant stream has a superheat of less than 4.0°F.
Aspect 4. The heat transfer circuit of any one of aspects 1 - 3, wherein superheat of the portion of the working fluid supplied to the gas bearing is at or about 5.0°F or greater than 5.0°F.
Aspect 5. The heat transfer circuit of any one of aspects 1 - 4, wherein the inlet of the lubricant stream connects to the main flow path at the evaporator or after the evaporator and before the condenser.
Aspect 6. The heat transfer circuit of any one of aspects 1 - 5, wherein the inlet of the lubricant stream connects to the main flow path after the compressor and before the condenser.
Aspect 7. The heat transfer circuit of anyone of aspects 1 - 6, wherein the heat source is a heater.
Aspect 8. The heat transfer circuit of aspect 7, wherein the heater is an electric heater.
Aspect 9. The heat transfer circuit of aspect 7, wherein the heater is a heat exchanger, the working fluid and a third process fluid flowing separately through the heater, the third process fluid heating the working fluid as the working fluid and the third process fluid flow through the heater.
Aspect 10. The heat transfer circuit of aspect 9, further comprising:
   a cooling circuit including the heater and the third process fluid flowing through the cooling circuit.
Aspect 11. The heat transfer circuit of aspect 10, wherein the cooling circuit includes one of a variable frequency drive and a motor of the compressor, the third process fluid cooling the one of the variable frequency drive and the motor of the compressor.
Aspect 12. The heat transfer circuit of any one of aspects 7 - 11, wherein
   the lubricant stream includes a tank and a thermoelectric cooler, the heater and the thermoelectric cooler disposed within the tank,
   the thermoelectric cooler and the heater configured to generate compressed gaseous working fluid within the tank for the lubricant stream to supply to the gas bearing, the compressed gaseous working fluid generated by the thermoelectric cooler condensing the portion of the working fluid and the heater vaporizing the condensed working fluid.
Aspect 13. The heat transfer circuit of aspect 1, wherein the heat source is a heater attached to or a part of the gas bearing.
Aspect 14. The heat transfer circuit of any one of aspects 1 - 13, wherein the lubricant stream includes an auxiliary compressor configured to compress the portion of the working fluid flowing through lubricant stream, the inlet of the lubricant stream connected to one of the evaporator, between the evaporator and the compressor, or a motor housing of the compressor.
Aspect 15. The heat transfer circuit of aspect 14, wherein the auxiliary compressor is the heat source.
Aspect 16. The heat transfer circuit of any one of aspects 1 - 15, wherein the one or more refrigerants include an HFO refrigerant.
Aspect 17. The heat transfer circuit of any one of aspects 1 - 16, wherein the compressor is an oil-free compressor.
Aspect 18. A method of supplying lubricant to a gas bearing of a compressor in a heat transfer circuit, the heat transfer circuit including the compressor, a condenser, an expander, an evaporator, and a heater, a working fluid flowing through the heat transfer circuit, the method comprising:
   heating the working fluid in the evaporator with a process fluid;
   compressing and further heating at least a portion of the working fluid heated in the evaporator, the further heating including the heater heating the portion of the working fluid heated in the evaporator, and the compressing including one of the compressor and an auxiliary compressor compressing the portion of the working fluid heated in the evaporator; and
   supplying the compressed and further heated portion of the working fluid to the gas bearing of the compressor as the lubricant.
Aspect 19. The method of aspect 18, wherein the compressed and further heated portion of the working fluid supplied to gas bearing has a superheat of at or about 4.0 °F or greater than 4.0°F.
Aspect 20. The method of either one of aspects 18 or 19, wherein the compressing includes the compressor compressing the working fluid heated in the evaporator, and the portion of the working fluid heated by the heater is a portion of the working fluid compressed by the compressor.
Aspect 21. A method of supplying lubricant to a gas bearing of a compressor in a heat transfer circuit, the heat transfer circuit including the compressor, a condenser, an expander, an evaporator, and a heat source, a working fluid flowing through the heat transfer circuit, a main flow path of the working fluid extending from the compressor through the condenser, the expander, the evaporator, and back to the compressor, the method comprising:
   suctioning a portion of the working fluid into the lubricant stream; and
   generating compressed gaseous working fluid within the lubricant stream from the portion of the working fluid, the compressed gaseous working fluid supplied from the lubricant stream to the gas bearing of the compressor.
Aspect 22. The method of aspect 21, wherein
   the portion of the working fluid is gaseous working fluid suctioned from the evaporator or a motor housing of the compressor, and
   generating compressed gaseous working fluid within the lubricant stream from the portion of the working fluid includes an auxiliary compressor compressing the gaseous working fluid within the lubricant stream to generate the compressed gaseous working fluid.
Aspect 23. The method of aspect 21, wherein
   suctioning the portion of the working fluid into the lubricant stream includes suctioning the portion of working fluid into a tank of the lubricant stream, and
   generating compressed gaseous working fluid within the lubricant stream from the portion of the working fluid includes vaporizing the portion of the working fluid within the tank to generate the compressed gaseous working fluid
Aspect 24. The method of aspect 23, wherein
   suctioning the portion of the working fluid into the lubricant stream includes one of:
   pumping the portion of the working fluid from the condenser into a tank of the lubricant stream, the portion of working fluid suctioned into the lubricant stream being liquid working fluid, and
   condensing the portion of the working fluid within the tank of the lubricant stream, the portion of the working fluid suctioned into the lubricant stream being gaseous working fluid.

The examples disclosed in this application are to be considered in all respects as illustrative and not limitative. The scope of the invention is indicated by the appended claims rather than by the foregoing description; and all changes which come within the meaning and range of equivalency of the claims are intended to be embraced therein.

## Claims

1. A heat transfer circuit, comprising:
a compressor for compressing a working fluid, the compressor including a gas bearing;
a condenser for cooling the working fluid with a first process fluid;
an expander for expanding the working fluid;
an evaporator for heating the working fluid with a second process fluid;
a main flow path of the working fluid extending from the compressor through the condenser, the expander, the evaporator, and back to the compressor;
a lubricant stream including an inlet and an outlet, the inlet being configured to receive a portion of the working fluid from the main flow path and the outlet being configured to supply the portion of the working fluid to the gas bearing of the compressor, wherein the portion of the working fluid includes one or more refrigerants that are each gaseous at the outlet of the lubricant stream; and
a heat source configured to increase one of a temperature of the working fluid flowing through the outlet of the lubricant stream and a temperature of the gas bearing.

2. The heat transfer circuit of claim 1, further comprising:
a controller which is configured to operate the heat transfer circuit so that the portion of the working fluid supplied to the gas bearing from the lubricant stream has a superheat of at or about 4.0°F or greater than 4.0°F.

3. The heat transfer circuit of claim 2, wherein the lubricant stream includes the heat source, and the controller is configured to operate the heat transfer circuit so that the portion of the working fluid at the inlet of the lubricant stream has a superheat of less than 4.0°F.

4. The heat transfer circuit of any one of claims 1 - 3, wherein the inlet of the lubricant stream connects to the main flow path at the evaporator or after the evaporator and before the condenser.

5. The heat transfer circuit of any one of claims claim 1 - 4, wherein the inlet of the lubricant stream connects to the main flow path after the compressor and before the condenser.

6. The heat transfer circuit of any one of claims 1 - 5, wherein the heat source is an electric heater.

7. The heat transfer circuit of any one of claims 1 - 5, further comprising:
a cooling circuit including the heat source and one of a variable frequency drive and a motor of the compressor, the cooling circuit being configured to convey a third process fluid therethrough to cool the one of the variable frequency drive and the motor of the compressor, wherein
the heat source is a heat exchanger configured so that the working fluid and the third process fluid flow separately through the heat exchanger so that the third process fluid heats the working fluid as the working fluid and the third process fluid flow through the heat exchanger.

8. The heat transfer circuit of any one of claims 1 - 6, wherein the heat source is a heater that is attached to or is a part of the gas bearing.

9. The heat transfer circuit of any one of claims 1 - 6, wherein
the heat source is a heater, the lubricant stream includes a tank and a thermoelectric cooler, and the heater and the thermoelectric cooler disposed within the tank, and
the thermoelectric cooler and the heater are configured to generate compressed gaseous working fluid within the tank for the lubricant stream to supply to the gas bearing, the compressed gaseous working fluid generated by the thermoelectric cooler condensing the portion of the working fluid and the heater vaporizing the condensed working fluid.

10. The heat transfer circuit of any one of claims 1 - 9, wherein the one or more refrigerants include an HFO refrigerant.

11. The heat transfer circuit of any one of claims 1 - 10, wherein the compressor is an oil-free compressor.

12. The heat transfer circuit of any one of claims 1 - 4, 6 - 8, 10-11 when not dependent on claim 5 or 9, wherein the lubricant stream includes an auxiliary compressor configured to compress the portion of the working fluid flowing through the lubricant stream, the inlet of the lubricant stream connected to one of the evaporator, between the evaporator and the compressor, or a motor housing of the compressor.

13. A method of supplying lubricant to a gas bearing of a compressor in a heat transfer circuit, the heat transfer circuit including the compressor, a condenser, an expander, an evaporator, and a heater, a working fluid flowing through the heat transfer circuit, the method comprising:
heating the working fluid in the evaporator with a process fluid;
compressing and further heating at least a portion of the working fluid heated in the evaporator, the further heating including the heater heating the portion of the working fluid heated in the evaporator, and the compressing including one of the compressor and an auxiliary compressor compressing the portion of the working fluid heated in the evaporator; and
supplying the compressed and further heated portion of the working fluid to the gas bearing of the compressor as the lubricant.

14. The method of claim 13, wherein the compressed and further heated portion of the working fluid supplied to gas bearing has a superheat of at or about 4.0°F or greater than 4.0°F.

15. The method of any one of claims 13 and 14, wherein the compressing includes the compressor compressing the working fluid heated in the evaporator, and the portion of the working fluid heated by the heater is a portion of the working fluid compressed by the compressor.
